# EUROPÄISCHE PATENTSCHRIFT

(11) **EP 1 049 812 B1**
(45) Veröffentlichungstag und Bekanntmachung des Hinweises auf die Patenterteilung: **22.08.2001**
(21) Anmeldenummer: 98956892.8
(22) Anmeldetag: 29.10.1998
(51) Int. Cl.: C22C 47/00

(54) **VERFAHREN ZUM HERSTELLEN EINES GUSSSTÜCKS**
METHOD FOR PRODUCING A CAST PART
PROCEDE DE PRODUCTION D'UNE PIECE EN FONTE

(30) Priorität: 22.11.1997 DE 19751929
(43) Veröffentlichungstag der Anmeldung: 08.11.2000
(73) Patentinhaber: KS Aluminium Technologie Aktiengesellschaft, 74172 Neckarsulm (DE)
(72) Erfinder: STENZEL, Otto, D-71543 Neuhütten-Wüstenrot (DE)
(74) Vertreter: Friz, Oliver
(86) Internationale Anmeldenummer: EP9806857
(87) Internationale Veröffentlichungsnummer: WO9927145

(56) Entgegenhaltungen:
- US-A- 4 056 874
- US-A- 5 549 976
- DATABASE WPI Section Ch, Week 8704 Derwent Publications Ltd., London, GB; Class E36, AN 87-025873 XP002094165 & JP 61 282470 A (TORAY IND INC) , 12. Dezember 1986

## Beschreibung

Die Erfindung betrifft ein Verfahren zum Herstellen eines Gußstücks aus Magnesiumlegierung, insbesondere Kolben oder Zylinderblock für Brennkraftmaschinen, mit eingegossener Kohlefaserverstärkung. Die Erfindung betrifft desweiteren ein nach vorstehendem Verfahren hergestelltes Gußstück.

Bei der Herstellung von Gußstücken aus Magnesiumlegierung bereitet die gegenüber anderen Legierungen, insbesondere Leichtmetalllegierungen, geringere Festigkeit sowie das erhöhte Kriechverhalten der Magnesiumlegierungen Probleme. Es ist daher bereits vorgeschlagen worden, derartige Gußstücke mit einer Kohlefaserverstärkung zu versehen, wobei hierfür vorzugsweise Kurzfasern verwendet werden. Es wurde insbesondere vorgeschlagen, Kohlefaserverstärkungen in Form von aus Kohlefasern und geeigneten Bindemitteln hergestellten Faserhohlkörpern, sogenannten Preforms, zu verwenden.

Es ist jedoch festgestellt worden, dass beim Eingießen der Kohlefasern bzw. der aus Kohlefasern hergestellten oder Kohlefasern enthaltenden Preforms Bindungsprobleme zwischen den Fasern und dem Umguß auftreten.

Aus den Dokumenten US-A-5,549,976 und US-A-4,056,874 ist die Bildung einer ZrC- bzw. einer MgCₓN_{y}-Schicht auf den Kohlefasern bekannt.

Der vorliegenden Erfindung liegt die Aufgabe zugrunde, die Bindung der Kohlefasern an die matrixbildende Magnesiumlegierung des Umgusses zu verbessern.

Diese Aufgabe wird durch ein Verfahren der eingangs erwähnten Art erfindungsgemäß dadurch gelöst, dass vor dem Eingießen auf der Oberfläche der Kohlefasern CS₂ gebildet wird und die so vorbehandelten Kohlefasern mit der Magnesiumlegierung eingegossen werden.

Aus der JP-A-61282470 ist es zwar bekannt, Kohlefasern in einer Reduktionsatmosphäre, z. B. H₂S, zu behandeln, um die Festigkeit der Kohlefasern zu verbessern. Weitere Hinweise lassen sich dieser Druckschrift aber nicht entnehmen.

Mit der Erfindung wurde festgestellt, dass nach einer derartigen Vorbehandlung der Kohlefasern eine weitgehend ideale Anbindung an die Magnesiumlegierungsmatrix erreicht werden kann. Dies ist darauf zurückzuführen, dass das Magnesium beim Eingießen der so vorbehandelten Kohlefasern den Kohlenstoff des CS₂ zu elementarem Kohlenstoff reduziert und dabei selbst zu Magnesium-Sulfid oxidiert wird. Dieser Prozess ist stark exotherm. Bei Temperaturen von etwa 600° Celsius werden ca. 150 kcal/Mol Schwefel frei. Durch die Reaktion an der Faseroberfläche entsteht eine gute Bindung zwischen den Kohlefasern und der matrixbildenden MagnesiumLegierung.

Die Bildung von CS₂ an der Oberfläche der Kohlefasern kann in bevorzugter Weise durch Erwärmen der Kohlefasern und Beaufschlagen mit einer H₂S-haltigen Atmosphäre erreicht werden.

Nach einer alternativen Verfahrensführung könnte das CS₂ auch durch Beaufschlagen der Kohlefasern mit einer geeigneten Schwefel und/oder Sulfide enthaltenden wässrigen Lösung gebildet werden.

Die vorbehandelten Kohlefasern könnten in ansich beliebiger Weise, bspw. in Form von vlies- oder mattenförmigen Körpern eingegossen werden. Die vorbehandelten Kohlefasern können aber auch zu Preform-Faserhohlkörpern geformt werden, die vom Metall der Magnesiumlegierung infiltrierbar sind. Es kann sich hierbei als vorteilhaft erweisen, wenn bei der Herstellung der Preform-Faserhohlkörper Bindemittel auf Sulfidbasis verwendet werden.

Alternativ hierzu wäre es nach einer weiteren Variante der Erfindung auch denkbar, dass zunächst ein Preform-Faserhohlkörper aus unbehandelten Kohlefasern hergestellt wird, und dass anschließend auf den Kohlefaseroberflächen des Preform-Faserhohlkörpers CS₂ gebildet wird.

In besonders bevorzugter Weise werden die Kohlefaseroberflächen mit einer im Wesentlichen geschlossenen CS₂-Beschichtung versehen, da dann eine optimale Anbindung der Kohlefasern an das Matrixmetall erreicht wird.

Gegenstand der Erfindung ist desweiteren ein Gußstück aus Magnesiumlegierung mit eingegossener Kohlefaserverstärkung, das erfindungsgemäß erhältlich ist durch ein Verfahren nach Anspruch 7.

## Patentansprüche

1. Verfahren zum Herstellen eines Gußstücks aus Magnesiumlegierung, insbesondere Kolben oder Zylinderblock für Brennkraftmaschinen, mit eingegossener Kohlefaserverstärkung, **dadurch gekennzeichnet,** dass vor dem Eingießen auf der Oberfläche der Kohlefasern CS₂ gebildet wird und die so vorbehandelten Kohlefasern mit der Magnesiumlegierung eingegossen werden.

2. Verfahren zum Herstellen eines Gußstücks aus Magnesiumlegierung nach Anspruch 1, dadurch gekennzeichnet, dass das CS₂ durch Erwärmen der Kohlefasern und Beaufschlagen mit einer H₂S-haltigen Atmosphäre gebildet wird.

3. Verfahren zum Herstellen eines Gußstücks aus Magnesiumlegierung nach Anspruch 1 oder 2, dadurch gekennzeichnet, dass das CS₂ durch Beaufschlagen der Kohlefasern mit einer geeigneten Schwefel oder Sulfide enthaltenden wässrigen Lösung gebildet wird.

4. Verfahren zum Herstellen eines Gußstücks aus Magnesiumlegierung nach mindestens einem der vorstehenden Ansprüche, dadurch gekennzeichnet, dass die durch Erzeugung von CS₂ vorbehandelten Kohlefasern zu Preform-Faserhohlkörpern geformt werden.

5. Verfahren zum Herstellen eines Gußstücks aus Magnesiumlegierung nach mindestens einem der vorstehenden Ansprüche, dadurch gekennzeichnet, dass bei der Herstellung der Preform-Faserhohlkörper Bindemittel auf Sulfidbasis verwendet werden.

6. Verfahren zum Herstellen eines Gußstücks aus Magnesiumlegierung nach mindestens einem der vorstehenden Ansprüche, dadurch gekennzeichnet, dass zunächst Preform-Faserhohlkörper gebildet werden, auf deren Kohlefaseroberflächen anschließend CS₂ gebildet wird.

7. Verfahren zum Herstellen eines Gußstücks aus Magnesiumlegierung nach mindestens einem der vorstehenden Ansprüche, dadurch gekennzeichnet, dass die Kohlefaseroberflächen mit einer im wesentlichen geschlossenen CS₂-Beschichtung versehen werden.

8. Gußstück aus Magnesiumlegierung mit eingegossener Kohlefaserverstärkung, erhältlich durch ein Verfahren nach Anspruch 7.

## Claims

1. Process for producing a casting from magnesium alloy, in particular a piston or cylinder block for internal combustion engines with cast carbon fibre reinforcement, characterised in that before casting, CS₂ is formed on the surface of the carbon fibres and the carbon fibres pretreated in this way are cast with the magnesium alloy.

2. Process for producing a casting made of magnesium alloy according to claim 1, characterised in that the CS₂ is formed by heating the carbon fibres and loading with an H₂S-containing atmosphere.

3. Process for producing a casting made of magnesium alloy according to claim 1 or 2, characterised in that the CS₂ is formed by loading the carbon fibres with a suitable sulphur- or sulphide-containing aqueous solution.

4. Process for producing a casting made of magnesium alloy according to at least one of the preceding claims, characterised in that the carbon fibres pretreated by production of CS₂ are moulded into premould hollow fibre articles.

5. Process for producing a casting made of magnesium alloy according to at least one of the preceding claims, characterised in that binders based on sulphide are used in the production of premould hollow fibre articles.

6. Process for producing a casting made of magnesium alloy according to at least one of the preceding claims, characterised in that initially premould hollow fibre articled are formed, on the carbon fibre surfaces of which CS₂ is then formed.

7. Process for producing a casting made of magnesium alloy according to at least one of the preceding claims, characterised in that the carbon fibre surfaces are provided with a substantially closed CS₂ coating.

8. Casting made of magnesium alloy with cast carbon fibre reinforcement, obtainable by a process according to claim 7.

## Revendications

1. Procédé de fabrication d'une pièce de fonte en alliage de magnésium, en particulier un piston ou un bloc-cylindres pour moteur à combustion interne, renforcée par des fibres de carbone infiltrées par coulage, caractérisé en ce que du CS₂ est formé à la surface des fibres de carbone avant la coulée et en ce que les fibres de carbone ainsi prétraitées sont infiltrées d'alliage de magnésium.

2. Procédé de fabrication d'une pièce de fonte en alliage de magnésium selon la revendication 1, caractérisé en ce que le CS₂ est formé par échauffement des fibres de carbone et exposition à une atmosphère contenant du H₂S.

3. Procédé de fabrication d'une pièce de fonte en alliage de magnésium selon la revendication 1 ou 2, caractérisé en ce que le CS₂ est obtenu par mise en contact des fibres de carbone avec une solution aqueuse adaptée contenant du soufre ou des sulfures.

4. Procédé de fabrication d'une pièce de fonte en alliage de magnésium selon l'une au moins des revendications précédentes, caractérisé en ce que les fibres de carbone prétraitées par production de CS₂ sont façonnées pour donner des préformes creuses en fibres.

5. Procédé de fabrication d'une pièce de fonte en alliage de magnésium selon l'une au moins des revendications précédentes, caractérisé en ce que des liants sulfurés sont utilisés lors de la fabrication des préformes creuses en fibres.

6. Procédé de fabrication d'une pièce de fonte en alliage de magnésium selon l'une au moins des revendications précédentes, caractérisé en ce que les préformes creuses en fibres sont réalisées dans un premier temps, du CS₂ étant ensuite produit sur les surfaces en fibres de carbone desdites préformes.

7. Procédé de fabrication d'une pièce de fonte en alliage de magnésium selon l'une au moins des revendications précédentes, caractérisé en ce que les surfaces en fibres de carbone sont dotées d'un revêtement de CS₂ sensiblement fermé.

8. Pièce de fonte en alliage de magnésium renforcée par des fibres de carbone infiltrées par coulage, pouvant être obtenue suivant un procédé selon la revendication 7.
